# FASCICULE DE BREVET EUROPEEN

(11) **EP 1 058 609 B1**
(45) Date de publication et mention de la délivrance du brevet: **16.12.2009**
(21) Numéro de dépôt: 99900992.1
(22) Date de dépôt: 22.01.1999
(51) Int. Cl.: B29B 17/02, B03B 9/06

(54) **PROCEDE ET INSTALLATION POUR SEPARER TOUTES CATEGORIES DE MATERIAUX POLYMERES**
VERFAHREN UND VORRICHTUNG ZUM TRENNEN ALLER ARTEN VON KUNSTSTOFFMATERIALIEN
METHOD AND INSTALLATION FOR SEPARATING ALL CATEGORIES OF POLYMER MATERIALS

(30) Priorité: 22.01.1998 FR 9800874
(43) Date de publication de la demande: 13.12.2000
(73) Titulaire: Galloo Plastics (S.A.), 59250 Halluin (FR)
(72) Inventeur: DE FERAUDY, Hugues, F-69220 Charentay (FR)
(74) Mandataire: Tilloy, Anne-Marie
(86) Numéro de dépôt international: PCT/FR1999/000136
(87) Numéro de publication internationale: WO 1999/037452

(56) Documents cités:
- WO-A-92/22380
- WO-A-98/03318
- DE-A- 4 329 270
- FR-A- 2 341 419
- RESCH M ET AL: "VERMISCHTE UND VERSCHMUTZTE ALTKUNSTSTOFFE STOFFLICH VERWERTEN" KUNSTSTOFFE, vol. 80, no. 4, 1 avril 1990, pages 493-495, XP000173800 cité dans la demande
- DREIRINGER G ET AL: "WIEDERAUFBEREITUNGS-ANLAGE FUER PVC-FOLIEN" KUNSTSTOFFBERATER, vol. 38, no. 6, 1 juin 1993, pages 26-30, XP000382027 cité dans la demande

## Description

La présente invention concerne un procédé destiné à séparer toutes catégories de matériaux polymères provenant de déchets.

L'invention concerne en outre une installation destinée à mettre en oeuvre le procédé pour séparer toutes les catégories de matériaux polymères.

L'industrie du recyclage concerne la récupération sélective de nombreuses catégories de matériaux polymères, par exemple, tels que le polyéthylène (PE), le polypropylène (PP), les polypropylènes chargés talc de 20 à 40 % (PPT), l'acrylonitrile-butadiène-styrène (ABS), le polystyrène (PS), les polyamides (PA), le polyméthacrylate de méthyle (PMMA), le polychlorure de vinyle (PVC), les polyuréthannes (PU), le Xenoy™ (alliage polycarbonate et polyester), et d'autres encore.

L'invention concerne un procédé par étapes et une installation correspondante qui assurent la valorisation de matériaux polymères usagés provenant de tous types de déchets et plus particulièrement de véhicules automobiles. Il s'agit dès lors de réaliser une séparation très sélective de mélanges de matériaux polymères selon leurs composants, et aussi la transformation de ces derniers en matériaux que l'on peut réutiliser ou réintroduire dans un nouveau cycle de fabrication.

### Etat de la technique

Le triage des matériaux polymères peut être réalisé de plusieurs façons. Il existe le tri manuel, le tri après broyage cryogénique, le tri avec les procédés électrostatiques, le tri par analyse infrarouge ou par rayonnement laser, le tri par densité, le tri selon la couleur et selon les formes. On va s'intéresser plus particulièrement au tri à débit élevé de très importants volumes de matériaux polymères de différentes natures, présents et mélangés au milieu d'autres matériaux divers.

On connaît d'après le DE-A- 43 29 270 une installation pour assurer le recyclage de matériaux polymère comprenant notamment un broyeur, un bassin d'entraînement pour éliminer les matériaux les plus lourds, un séparateur par flux d'air pour séparer les polymères sous forme de feuilles, puis des séparateurs par densité. D'une part, dans le bassin d'entraînement, des matériaux polymères de densité supérieure à 1 peuvent être éliminés malgré leurs avantages et d'autre part, il n'y a aucun nettoyeur de matériaux polymères. Ce nettoyeur s'avère indispensable dans le cas de déchets provenant de décharges publiques ou de casses automobiles.

Le US-A- 4 728 045 décrit un procédé de récupération des matériaux synthétiques provenant de bouteilles en matériaux polymères. Sont réalisés successivement un broyage, une séparation par flux d'air pour éliminer les matériaux légers tel du papier et du PP sous forme de film, deux séparations par flottation en milieu à densité précise pour séparer le PE du polyéthylène-téréphtalate (PET) et une nouvelle séparation aérodynamique. Ce procédé n'est applicable qu'aux bouteilles en matériaux polymères dont la composition en matériaux polymères est déterminée au départ de façon précise.

On connaît d'après le WO-A- 92/ 22 380, ayant servi de bas pour le préambule de la revendication 1, un procédé pour séparer des matériaux polymères provenant de récipients. Ce procédé comprend une étape de broyage, une étape de séparation par flux d'air, une étape de nettoyage des matériaux, plusieurs étapes de séparation par densité. Ce procédé n'est applicable qu'à un type de substrat de départ dont la composition en matériaux polymères est connue de manière précise.

Le document Kunststoffberater, 38, Juin 1993, N° 6, pages 26 à 30, décrit une installation comprenant un broyeur, un laveur et des séparateurs par densité. Le laveur possède un dispositif à tambour rotatif. Mais, le substrat au départ contient de 95 à 100 % de PVC et de 0 à 5 % d'impuretés. Cette installation n'est orientée que pour la séparation des PVC.

Le document Kunststoffe, 80, Avril 1990, N° 4, pages 493 à 495, décrit une installation pour séparer des matériaux polymères sensiblement identique à la précédente comprenant un broyeur, un dispositif de nettoyage sous la forme d'un tambour rotatif avec des buses et des séparateurs par densité.

On connaît d'après le FR-A- 2 599 279 un procédé pour séparer des matériaux polymères. Après broyage et lavage, il y a centrifugation dans un hydrocyclone, puis tri grâce à un crible à secousse.

Le AT- 363 051 présente un procédé pour récupérer des matériaux synthétiques qui consiste en un broyage, une première flottation, un lavage et à nouveau un broyage suivi directement d'une seconde flottation. Ces procédés donnent des résultats insuffisants en terme de qualité des matériaux polymères obtenus après séparation

Mais aucun de ces procédés cités ne donnent de résultats satisfaisants. Ils sont lents ou nécessitent au départ un investissement très important. Ils sont également inapplicables au triage à débit important et ne sont donc pas directement adaptables à l'échelle industrielle. Ainsi, il apparaît qu'aucun processus de séparation de l'art antérieur n'est utilisable pour le triage de mélanges d'une large variété de matériaux polymères provenant du broyage de véhicules automobiles ou d'autres sources de déchets. De plus, ils apparaissent être dédiés à une seule ou au maximum à deux catégories de matériaux polymères, les autres matériaux étant de ce fait rejetés dans l'environnement.

### Exposé de l'invention

Le problème posé est de réaliser un procédé et une installation correspondante de séparation de mélanges complexes de matériaux polymères de tous types, qui permettent de séparer, de purifier et d'obtenir toutes les catégories de matériaux polymères. Le procédé et l'installation doivent être efficaces à l'échelle industrielle, et doivent donner un degré de pureté des nombreux différents matériaux polymères analogue au degré de pureté des matériaux polymères de première fusion.

Le but de l'invention est de pallier le manque d'efficacité des techniques existantes, en utilisant et en plaçant de façon adéquate une étape de séparation mécanique supplémentaire et deux phases de séparation par densité particulières, dans une succession d'étapes de nettoyage et de broyage.

Suivant l'invention, le procédé pour séparer toutes catégories de matériaux polymères provenant de déchets, est caractérisé par les étapes et les phases suivantes, qui comprennent (i) dans l'ordre: une étape de broyage, une étape de séparation mécanique par facteur de forme, (ii) dans un ordre quelconque une étape de nettoyage, et deux phases de séparation par densité, dans lesquelles on fait varier progressivement la densité dans un sens croissant ou dans un sens décroissant.

Ces cinq étapes et phases principales peuvent être organisées selon plusieurs possibilités différentes. On peut commencer par une étape de broyage suivie d'une étape de séparation mécanique par facteur de forme, ces deux étapes étant ensuite suivies selon un ordre quelconque d'une étape de nettoyage des matériaux polymères et de deux phases de séparation par densité. Un ordre a donné des résultats particulièrement satisfaisants : une étape de broyage est suivie d'une étape de séparation mécanique par facteur de forme, qui est suivie d'une première phase de séparation par densité, suivie ensuite d'une étape de nettoyage des matériaux polymères, enfin suivie d'une deuxième phase de séparation par densité.

Dans la première phase de séparation par densité, on fait progressivement décroître la densité de 1,25 à 1. Dans la deuxième phase de séparation par densité, on augmente progressivement la densité de 1 à 1,25. La première phase et/ou la deuxième phase de séparation par densité peuvent comprendre plusieurs étapes connectées en parallèle, les densités prenant alors des valeurs discrètes, par paliers d'une étape à l'autre étape. Ou bien, la première phase et/ou la deuxième phase de séparation par densité peuvent également être mises en oeuvre chacune dans un seul séparateur par densité, la densité variant en continu selon une fonction lissée ou par paliers. Dans ce dernier cas, les étapes correspondent à des choix particuliers de densités, dans lesquels on choisit de récupérer et de sortir du séparateur unique les matières à densité supérieure ou inférieure à la valeur de densité précisément choisie et de ce fait atteinte dans le séparateur. Chacune des étapes de la première phase est connectée en série avec chacune des étapes de la deuxième phase.

Les deux phases de séparation par densité se font de préférence par une ou plusieurs flottations en milieu liquide. Les matériaux polymères mélangés à d'autres matières sont plongés dans un bain. On contrôle et on ajuste la densité du bain, ce qui permet de séparer une matière qui va surnager, à densité inférieure à celle du milieu liquide, d'une autre matière qui va couler, à densité supérieure à celle du milieu liquide. On récupère les matières intéressantes, qui flottent ou qui coulent, que l'on soumet ensuite à de nouveaux traitements. Les séparations par densité peuvent se faire également grâce à un dispositif mécanique comprenant une table densimétrique.

L'étape de séparation mécanique par facteur de forme se fait notamment grâce à des moyens de criblage, comprenant un tambour rotatif à grille calibrée, qui permet l'élimination de toutes les matières de taille trop importante.

L'étape de nettoyage des matériaux polymères permet à ceux-ci de retrouver une surface identique à la surface de matériaux de première fusion, c'est à dire une surface exempt de couches altérées, de peinture, de graisse, etc. Le nettoyage est réalisé en milieu liquide, de préférence sous agitation énergique, à température élevée, en milieu liquide à compositions précises.

Pour affiner encore la séparation, éliminer le maximum d'impuretés de toutes tailles et de tous matériaux, et pour obtenir un procédé optimisé, on peut intercaler d'autres étapes de purifications supplémentaires parmi les principales étapes. Une ou plusieurs étapes de mouillage, de broyage, des étapes de séparation à flux d'air pour éliminer soit les particules les plus légères soit les blocs les plus denses, une étape de tri électrostatique, une étape de tri optique, une étape de séparation entre deux thermoplastiques ou entre thermoplastiques et thermodurcissables par fusion différentielle, une étape de séparation par tri balistique, une étape de séparation par tri en lit fluidisé, une étape de séparation par broyage cryogénique, une étape de séparation par densité grâce à un dispositif mécanique, des étapes de rinçage et d'égouttage, une étape de centrifugation pour éliminer tout liquide, une étape de séchage et une étape de stockage en silo sont placées de façon adéquate dans la chaîne.

Pour obtenir des matériaux séparés de meilleure qualité et de façon à améliorer leurs propriétés mécaniques respectives, on centrifuge et on sèche si les polymères sont humides, puis on homogénéise, on extrude, on centrifuge, on calibre (« compoundage »), on homogénéise à nouveau et finalement on ensache les matériaux polymères purifiés obtenus.

Grâce à l'invention, les successions précises de chacune des étapes de séparation permettent d'obtenir à la fin du procédé des matériaux polymères extrêmement purifiés. On peut mettre en oeuvre les différentes étapes ou phases constitutives du procédé en continu, étape par étape, ou on peut mettre en oeuvre ces dernières par fournées successives, avec des arrêts et des stockages momentanés de matières après certaines de ces étapes constitutives. Cette dernière manière, consistant à opérer par « batch », assure une parfaite adaptation du procédé, à l'arrivée, sous forme de déchets, de matériaux polymères de différentes catégories qui sont présentes en quantités variables.

Conformément à l'invention, le procédé permet d'obtenir du PE ou du PE extrudé, du PP ou du PP extrudé, du PS ou du PS extrudé, de l'ABS ou de l'ABS extrudé, des PP chargés de 20 à 40 %, des PA, du PMMA, du Xenoy™, du PVC et d'autres encore.

Selon un second aspect de l'invention, une installation est caractérisée en ce qu'elle comporte les dispositifs de broyage, de séparation par densité avec flottation, de séparation mécanique par crible, de séparation mécanique à tambour rotatif, de séparation à flux d'air, de nettoyage, de séparation par densité à dispositif mécanique, de séparation électrostatique, de séparation par tri optique, de séparation par fusion différentielle, de broyage cryogénique, de séparation par tri balistique, de lit fluidisé, de mouillage, de rinçage et d'égouttage, de centrifugation, de séchage, d'homogénéisation, de stockage, d'extrusion, de calibrage et d'ensachage. Ces dispositifs se succèdent dans l'installation selon l'ordre donné par le procédé de séparation, ainsi que par ses variantes. Les dispositifs qui précèdent alimentent les dispositifs suivants.

D'autres avantages du procédé et de l'installation selon l'invention font l'objet des revendications dépendantes et apparaîtront à la lecture de l'exemple de réalisation détaillé de l'invention, en se référant aux dessins donnés à titre d'illustration, dans lequel :

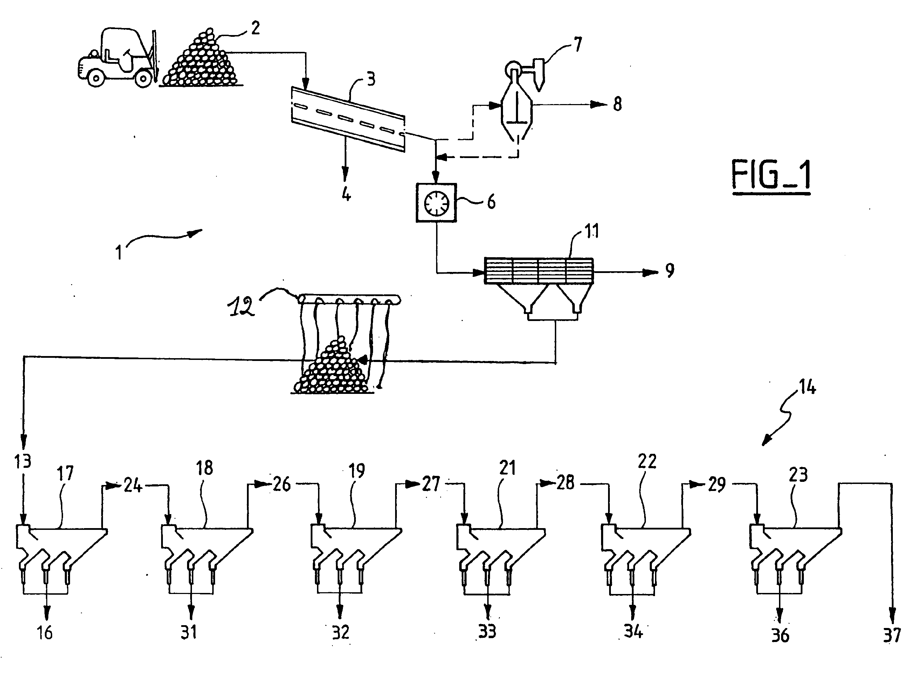

- la Figure 1 représente une première partie de l'installation, mettant en oeuvre le procédé de l'invention, assurant un début de séparation grossière ;

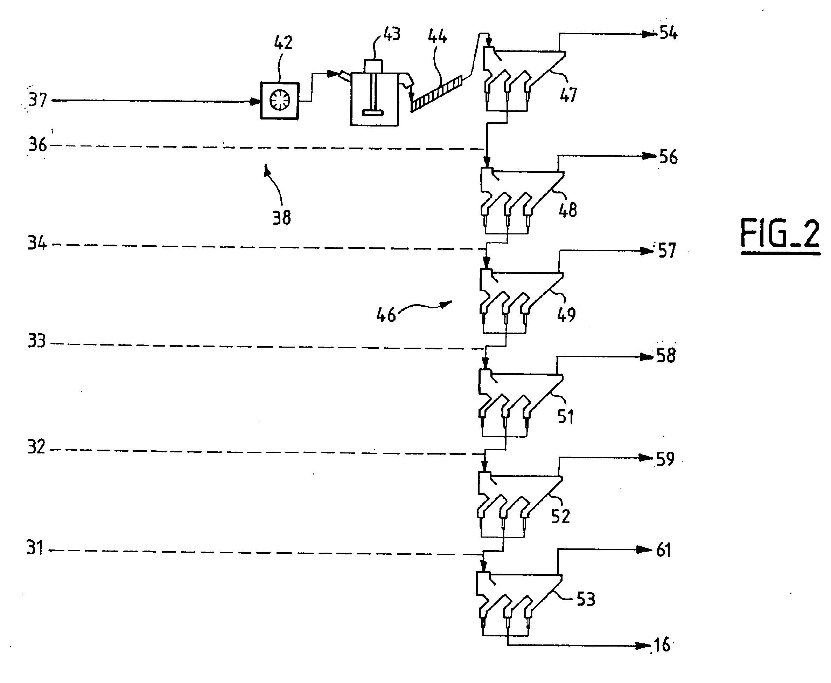

- la Figure 2 représente une deuxième partie de l'installation, mettant en oeuvre le procédé de l'invention, assurant une séparation plus fine ;
- la Figure 3 représente une troisième partie de l'installation, mettant en oeuvre le procédé de l'invention, assurant les ultimes étapes de purification.

### Description détaillée de l'invention

Dans toute l'installation 1 qui va être décrite ci-dessous, des bandes de convoyage, des systèmes à vis, des transports pneumatiques, représentés uniquement sous la forme de flèches, permettent de transporter de manière continue et à grande vitesse les matières d'un dispositif vers l'autre. Toutes les étapes et leurs dispositifs correspondants fonctionnent en continu, ou également par fournée selon le débit respectif de chacun des dispositifs. La suite des étapes donnée ci-après a donné des résultats particulièrement intéressants en terme de quantité et de qualité des matériaux polymères obtenus en fin de chaîne.

Au départ, on extrait l'essence, les huiles, le réfrigérant, on écrase, puis on concasse des voitures et/ou des camions et/ou des autobus, ou encore des ordures ménagères.

On obtient un tas de déchets 2, que l'on va traiter pour en récupérer le maximum de matériaux polymères. Dans une première étape de séparation mécanique par criblage, on élimine du tas de déchets 2 les fines, les matières minérales, le verre, les cailloux et la terre 4. Cette opération se fait dans un crible 3 à maille carrée de 10 à 12 mm.

Tous les morceaux métalliques libres, ainsi que les métaux piégés au sein d'autres matériaux, sont ensuite séparés des parties non métalliques par des techniques habituelles. Un séparateur à aimant permet de sortir des métaux ferreux, et un séparateur à courant de Foucault permet de sortir des métaux non-ferreux, aluminium, etc. (non représentés).

Les matières sont ensuite dirigées vers une étape de broyage dans un broyeur grossier 6 entre 8 et 100 mm, de préférence de 10 à 40 mm et en moyenne à 25 mm.

On intercale à ce niveau de manière facultative (en pointillés), entre le crible 3 et le broyage 6, une étape de séparation à flux d'air dans un séparateur 7 à puissance variable, qui permet l'élimination de toutes les matières lourdes 8. En traitant de préférence des matières sèches, cette aspiration aérodynamique assure la sortie hors du circuit des caoutchoucs denses, des métaux restants, du bois dense. On réalise ici un premier enrichissement rapide et sélectif, de façon à obtenir un préconcentré avec une quantité de 5 à 50 % en matériaux polymères, déjà plus intéressante. On régule la puissance du flux d'air de manière approximative en fonction de la nature des déchets arrivants.

Les opérations de criblage mécanique et de séparation aérodynamique précédentes ont pour premier objectif d'éviter de broyer n'importe quelle matière par exemple des clous, des cailloux, des pneus, etc., et pour deuxième objectif de réaliser des économies d'énergie en faisant diminuer la quantité de matière à broyer. Il reste néanmoins des morceaux de bois, de la terre adhérant aux matériaux polymères, des goudrons, du papier, etc.

On élimine ensuite les parties 9 telles que les mousses, les PU alvéolaires, les caoutchoucs alvéolaires, les textiles, les fils, le PS expansé, les déchets de film en matériaux polymères, le bois par une deuxième sélection mécanique spécifique. Cette opération est une séparation par facteur de forme qui permet l'élimination de toutes les matières de taille trop importante. Un dispositif de criblage 11 permet de réaliser ce tri. Il comprend par exemple un tambour rotatif ayant une grille calibrée, dont la maille a une taille par exemple de 10 mm de large sur 25 cm de long. De cette manière, le tambour retient en vue de l'élimination 9 tout ce qui n'a pas une forme de plaquettes. donc tout ce qui n'a pas été correctement déchiqueté lors d'un broyage précédent. On poursuit le traitement avec toutes les matières qui passent au travers de ce trieur.

De manière préférentielle, à ce stade, on peut densifier du bois qui est présent parmi le matériau polymère, afin de lui donner une densité supérieure à 1, pour l'éliminer ensuite par une séparation selon le critère de la densité. Pour cela, on réalise un mouillage, par exemple à l'aide d'un dispositif qui asperge de l'eau 12 sur le tas de déchets. On peut également profiter des moyens de convoyage, pour un arrosage en continu. On peut encore procéder par immersion des déchets, ou bien faire mécaniquement un défibrage du bois, par trituration, par exemple à l'aide d'une turbine. On peut utiliser pour ce mouillage une solution alcaline à base de KOH ou de NaOH qui a pour but de commencer une hydrolyse des fibres de cellulose du bois. L'objectif est de déstructurer cette matière afin de lui donner une densité supérieure à 1. On obtient des matières 13.

On dirige les matières 13 vers une première phase 14 de séparation par densité. On veut récupérer par cette phase 14 un important gisement de matériaux polymères de densité inférieure, par exemple, à 1,25. Le PVC, le PP chargé talc à 50 %, le bois dense, et d'autres stériles 16 sont éliminés. Sont récupérés et sélectivement séparés principalement les polymères avec d ≤1,25 notamment du ou des :
- PU mousses (d = 0,02 à 0,035),
- PP (d = 0,9),
- PE (d = 0,92 à 0,95),
- éthylène-vinyl-acétate EVA,
- copolymères éthylène-propylène, propylène-éthylène-propylène-caoutchouc, éthylène-propylène-diène-monomère EPDM,
- mousses de PE, mousses de PP;
- PS non chargé (d = 1,05),
- polyoléfines chargées avec d > 1, PP chargé 20 % talc (d = 1,05),
- ABS non chargé (d = 1,07),
- polycarbonates PC (d = 1,2),
- caoutchoucs,
- PE chargé,
- polyesters PET insaturés (d = 1,10 à 1,3),
- polyamides, PA₆ (d = 1,13), PA_{6,6} (d = 1,14), PA_{6.10} (d = 1,08), PA₁₁ (d = 1,04). PA₁₂ (d = 1,02), chargés ou non chargés,
- PMMA (d = 1,18),
- polyesters saturés (d □ 1,2), chargés ou non chargés en fibres de verre,
- PU chargés (d = 1,21),

De façon à récupérer la quasi-totalité des catégories de matériaux polymères, la première phase de séparation par densité 14 comprend plusieurs étapes de séparation par densité connectées en série. La densité s'échelonne en décroissant d'une étape à l'autre étape, de 1,25 à 1.

On a choisi d'utiliser des séparateurs hydrauliques par flottation. Pour d = 1, le milieu liquide comprend de préférence de l'eau. Pour d > 1, le milieu liquide du séparateur hydraulique contient de l'eau, des agents mouillants, et des composés minéraux tels que des argiles, de la bentonite, ou des composés solubles tels que des sels, etc., composés utilisés pour augmenter la densité de l'eau. On utilise de préférence de l'argile de carrière. Cette dernière est mise en suspension dans l'eau et on élimine les particules d'argiles les plus lourdes qui s'accumulent au fond du récipient afin d'obtenir un milieu homogène. On ajuste ensuite la densité en rajoutant de l'eau. Le rôle de l'agent mouillant est également de maintenir en suspension l'argile. L'agent utilisé est du SP 30 S^{™} de la société Coatex.

Dans cette première phase, 6 séparateurs par flottation à densité fixe correspondent à 6 étapes distinctes et à 6 paliers de densité, par exemple. Dans le premier séparateur 17, la densité est sensiblement de 1,25. Dans le deuxième 18, la densité est sensiblement de 1,18. Dans le troisième 19, la densité est sensiblement de 1,15. Dans le quatrième 21. la densité est sensiblement de 1,10. Dans le cinquième 22, la densité est sensiblement de 1,05. Et dans le sixième et dernier séparateur par flottation 23, la densité est sensiblement égale à 1..

On peut également mettre en oeuvre la première phase de séparation par densité 14 dans un seul séparateur par densité, dans lequel on fait progressivement varier en continu la densité dans un sens décroissant. La densité est diminuée par rajout automatique d'une quantité précise d'eau. On arrête momentanément la chute de densité et on recueille les matières à la densité donnée choisie, ce qui correspond à une étape équivalente à celles décrites ci-dessus. On peut encore réaliser la première phase de séparation par densité 14 avec un ou plusieurs séparateurs par densité fonctionnant en continu, auquel on connecte en parallèle un ou plusieurs autres séparateurs par densité fixe.

Dans cette première phase 14 à étapes de séparation par densité, on conduit les matières 24, possédant une densité inférieure dans le séparateur 17 à d = 1,25. en direction du deuxième séparateur 18 qui le suit directement. De manière analogue, on conduit les matières 26, possédant une densité inférieure dans le séparateur 18 à d = 1,18, en direction du troisième séparateur 19 qui le suit directement. On conduit les matières 27, possédant une densité inférieure dans le séparateur 19 à d = 1, 15, en direction du quatrième séparateur 21 qui le suit directement. On conduit les matières 28, possédant une densité inférieure dans le séparateur 21 à d = 1,10, en direction du cinquième séparateur 22 qui le suit directement. Et enfin on conduit les matières 29, possédant une densité inférieure dans le séparateur 22 à d =1,05, en direction du sixième séparateur 23 à d = 1 qui le suit directement.

Les matières à densité supérieure 16, c'est à dire qui coulent dans le premier séparateur 17, sont éliminées car contenant trop de matériaux lourds stériles. Les matières à densité supérieure 31, c'est à dire qui coulent dans le deuxième séparateur 18, sont récupérées pour être d'avantage purifiées. Elles comprennent du Xenoy™, des PC, des PET, des PU, du PP chargé 40 %, du bois et autres. De manière analogue, les matières à densité supérieure 32, c'est à dire qui coulent, dans le troisième séparateur 19 comprennent des PMMA, des PU, du bois et autres. Les matières à densité supérieure 33, c'est à dire qui coulent, dans le quatrième séparateur 21 comprennent des PA, des PU, du PP chargé 30 %, du bois et autres. Les matières à densité supérieure 34, c'est à dire qui coulent, dans le cinquième séparateur 22 comprennent des ABS, des PU, du bois et autres. Les matières à densité supérieure 36, c'est à dire qui coulent, dans le sixième séparateur 23 comprennent du PS, du PP chargé 20 %, des PU, du bois et autres. Sont également récupérées et purifiées par la suite, les matières à densité inférieure 37, c'est à dire qui flottent, dans le sixième et dernier séparateur 23 et qui comprennent du PP, du PE, des mousses, des tissus, des fibres, des textiles, du bois et autres.

Toutes ces matières 31, 32, 33, 34, 36 et 37, listées ci-dessus avec leurs différentes catégories de matériaux polymères à forte valeur ajoutée, vont être successivement traitées dans une ou plusieurs chaînes parallèles 38 (dont une seule est représentée en détail, les autres en pointillés étant analogues), comprenant chacune des étapes disposées en série.

De façon à parfaire et à affiner la dimension des morceaux de polymères, une deuxième étape facultative de broyage dans un broyeur 42 plus fin, à maille de 5 à 25 mm, et en moyenne de 10 à 15 mm, termine la fragmentation des matières.

A ce niveau intervient une étape indispensable de nettoyage intense. Cette opération est capitale car elle permet aux matériaux polymères sous la forme de substrat de retrouver leur surface native. En effet, ceux-ci sont très souvent souillés par des goudrons, de la terre, des résidus de plomb, des huiles, du liquide de refroidissement, de l'acide, du gas-oil, de l'essence. De plus, les surfaces des matériaux polymères sont soit recouvertes de peinture (cas des pare-chocs en PP), soit attaquées par des agents chimiques, soit oxydées, soit altérées par les rayons U.V. ou bien encore vieillies. Tous ces facteurs modifient les tensions superficielles de surface et ne permettent pas la pleine efficacité des séparations ultérieures par densité. Le traitement pour décaper est nécessaire si l'on veut que les matériaux polymères obtenus en fin de séparation aient les mêmes propriétés physico-chimiques que des matériaux polymères vierges. De ce fait, les morceaux sont introduits dans un ou plusieurs appareils à laver et à triturer 43, par exemple de Wemco™. Ces derniers comprennent, par exemple, une ou plusieurs cuves fixes, des palles rotatives et de puissants moyens moteurs pouvant développer 0,05 à 0,5 kWh par kg de matière à traiter. On ajoute dans les cuves un milieu liquide composé d'eau, d'un agent de nettoyage et éventuellement d'un agent d'abrasion. L'opération de lavage est réalisée en milieu le plus concentré possible, à température ambiante ou mieux encore à chaud, l'eau pouvant être amenée à ébullition grâce à la chaleur dissipée par les moteurs.

La composition du milieu de nettoyage est préférentiellement :
- mélange de matériaux polymères de 50 à 70 % en poids ;
- phase liquide de 30 à 50 % en poids comprenant :

- eau 50 à 100 % en poids,
- agent nettoyant 0 à 20 % en poids, par exemple soude, potasse, carbonate de sodium, ou savons biodégradables non moussants, du Akypo MB 2621 S™ de la société Chemy,
- agent mouillant (à base d'alcools gras modifiés par oxyde d'éthylène et/ou oxyde de propylène) ; et
- agent d'abrasion 0 à 30 % en poids par exemple des minéraux tels que de la poudre de carbonate de calcium, du talc, de la silice, de l'alumine.

A la sortie, les matériaux polymères sont rincés à l'eau et s'égouttent, par exemple, dans la vis d'extraction 44. L'eau récupérée peut être réinjectée dans l'appareil à laver 43.

On dirige ensuite toutes les matières vers une deuxième phase 46 de séparation par densité. Cette phase permet de parfaire la sélection déjà commencée lors de la première phase séparation par flottation 14. Les surfaces des matériaux polymères ont été nettoyées lors de l'étape précédente, ce qui permet de faire plonger les matériaux, dont des artefacts leur attribuaient de fausses densités inférieures à 1. Les différentes catégories de matériaux polymères sont séparées dans cette phase, si la densité du milieu liquide est ajustée de façon précise. Il y a aussi élimination par coulage des matériaux, sables résiduels auparavant collés aux polymères et surtout de la plus grosse partie du bois. Cette matière a été véritablement érodée, dilacérée, et imbibée de liquide lors de l'étape de nettoyage précédente ou de mouillage-trituration initiale, lui donnant ainsi une densité supérieure à 1,25.

De façon à récupérer la quasi-totalité des catégories de matériaux polymères, la deuxième phase de séparation par densité 46 comprend plusieurs étapes de séparation par densité connectées en parallèle. La densité s'échelonne en croissant d'une étape à l'autre étape, de 1 à 1,25.

De ce fait, chacune des étapes de la première phase de séparation par densité 14 est connectée en série avec chacune des étapes de la deuxième phase 46. Les matières 37, possédant une densité inférieure dans la dernière étape de séparation par densité de la première phase 14, sont conduites en direction de la première étape de séparation par densité de la deuxième phase 46. On conduit les matières 36 possédant une densité supérieure, dans la dernière étape de séparation par densité de la première phase 14, en direction de la deuxième étape de séparation par densité de la deuxième phase 46. On conduit les matières 34 possédant une densité supérieure, dans l'avant-dernière étape de séparation par densité de la première phase 14, en direction de la troisième étape de séparation par densité de la deuxième phase 46, et cet enchaînement se fait de manière récurrente jusqu'aux matières 31 possédant une densité supérieure, dans la deuxième étape de séparation par densité de la première phase 14, qui sont conduites en direction de la dernière étape de séparation par densité de la deuxième phase 46.

On a choisi d'utiliser des séparateurs hydrauliques par flottation. Par exemple, 6 séparateurs par flottation à densité fixe correspondent à 6 étapes distinctes et à 6 paliers de densité. Dans le premier séparateur 47, la densité est de sensiblement 1. Dans le deuxième 48, la densité est sensiblement de 1,05. Dans le troisième 49, la densité est sensiblement de 1, 10. Dans le quatrième 51, la densité est sensiblement de 1,15. Dans le cinquième 52, la densité est sensiblement de 1,18. Et dans le sixième et dernier séparateur par flottation 53, la densité est sensiblement égale à 1,25.

De manière analogue à la première phase, on peut également mettre en oeuvre la deuxième phase de séparation par densité 46 dans un seul séparateur par densité, dans lequel on fait progressivement varier en continu la densité dans un sens croissant. La densité est augmentée par rajout automatique d'une quantité précise d'argile. On arrête momentanément l'augmentation de densité et on recueille les matières à la densité donnée choisie, ce qui correspond à une étape équivalente à celles décrites ci-dessus. On peut encore réaliser la deuxième phase de séparation par densité 46 avec un ou plusieurs séparateurs par densité fonctionnant en continu, auquel on connecte en parallèle un ou plusieurs autres séparateurs par densité fixe.

Dans cette deuxième phase 46 à étapes de séparation par densité en parallèles, on conduit les matières, possédant une densité supérieure dans le séparateur 47 à d = 1, en direction du deuxième séparateur 48 qui le suit directement. De manière analogue, on conduit les matières, possédant une densité supérieure dans le séparateur 48 à d = 1,05, en direction du troisième séparateur 49 qui le suit directement. On conduit les matières, possédant une densité supérieure dans le séparateur 49 à d = 1,10, en direction du quatrième séparateur 51 qui le suit directement. On conduit les matières, possédant une densité supérieure dans le séparateur 51 à d =1,15, en direction du cinquième séparateur 52 qui le suit directement. Et enfin on conduit les matières, possédant une densité supérieure dans le séparateur 43 à d = 1,18, en direction du sixième séparateur 53 à d = 1,25 qui le suit directement.

Sont récupérées pour être d'avantage purifiées, les matières à densité inférieure 54. c'est à dire qui flottent, dans le premier séparateur 47 et qui comprennent du PE, du PP et autres. De manière analogue, les matières à densité inférieure 56, c'est à dire qui flottent, dans le deuxième séparateur 48 comprennent du PS, du PP chargé 20 %, et autres. Les matières à densité inférieure 57, c'est à dire qui flottent, dans le troisième séparateur 49 comprennent des ABS et autres. Les matières à densité inférieure 58, c'est à dire qui flottent, dans le quatrième séparateur 51 comprennent des PA, du PP chargé 30 %, et autres. Les matières à densité inférieure 59, c'est à dire qui flottent, dans le cinquième séparateur 52 comprennent des PMMA, et autres. Sont également récupérées et purifiées par la suite, les matières à densité inférieure 61, c'est à dire qui flottent, dans le sixième et dernier séparateur 53 et qui comprennent du Xenoy^{™}, du PP chargé 40 %, et autres. Sont éliminées, les matières 16 qui coulent dans ce même dernier séparateur 53 à d = 1,25.

Toutes ces matières 54, 56, 57, 58, 59 et 61, listées ci-dessus, avec leur unique ou au plus leurs deux catégories de matériaux polymères différents et pratiquement purs, vont être successivement traitées dans une seule ou plusieurs chaînes parallèles de séparations et purifications supplémentaires 62 (une seule étant représentée), comprenant des étapes disposées en série. Ainsi, on réalise pour les matériaux polymères, qui surnagent dans la deuxième phase de séparation par densité 46, un rinçage, et un égouttage dans la vis de transport 63, de façon à en éliminer complètement l'argile adhérente. Ensuite, on réalise une centrifugation dans une centrifugeuse 64 pour éliminer tout liquide restant.

Un séchage en continu est ensuite accompli. Cette opération peut être effectuée avec différents appareils. Par exemple, on peut utiliser un sécheur à lit fluidisé 66, un sécheur flash, un séchage dans un triturateur Wemco™, où l'élévation de température est réalisée grâce à l'énergie mécanique d'agitation, un sécheur à contre-courant de type Voom^{™}. Les restes de particules de bois séchées auront une densité à peu près égale à 0,7.

La masse résultante est stockée dans un silo tampon 67, utile si la chaîne tombe en panne ou en cas d'arrêt pour entretien et maintenance. Le processus peut s'arrêter à l'étape de stockage en silo 67, si l'on désire commercialiser uniquement un mélange de polymères.

A ce niveau est placée une étape, éventuellement facultative, de séparation avec flux d'air. Cette étape doit être placée après une étape de séchage. Le séparateur 68 permet l'élimination de toutes les matières légères 69, telles que les poussières restées adhérentes, les petites fibres et mousses ainsi que les particules de bois restantes.

Une étape de tri mécanique par densité permet de parfaire la séparation et peut être disposée par exemple à ce niveau de la chaîne 62. Elle se fait, de préférence, dans un dispositif mécanique de table densimétrique à secousse 71 de la société Herbold ou de la société Eldan, où est rejetée la charge circulante 72. Toutes les matières légères circulantes restantes, bois péché, mousses, caoutchouc, et impuretés sont éliminées 73. Ce tri mécanique par densité avec une table à secousse 71 peut servir à séparer deux matériaux polymères selon leur densité qui leur est propre. Le procédé peut s'achever ainsi à ce niveau par l'obtention de polymères assez purs.

En phase finale de triage, on peut également placer (en pointillés) une dernière étape de séparation par densité pour séparer deux matériaux particulièrement intéressants et à forte valeur ajoutée parmi les densités inférieures à 1 : ce sont les deux polyoléfines PE et PP 54. La densité du PP est de 0,9 et la densité du PE est de 0,92 à 0,95. La séparation se fait dans un séparateur en milieu liquide 74 de densité réglée de manière très précise, et de ce fait comprise entre 0,9 et 0,95. Le milieu liquide comprend de préférence de l'eau et un alcool choisi parmi le méthanol, l'éthanol, un alcool de vin, un alcool dénaturé, ou de l'alcool à brûler. Le degré du mélange eau-alcool utilisé est compris entre 55 et 60°. Le contrôle est réalisé à l'aide d'un pèse-alcool. Le réglage du degré d'alcool permet d'optimiser la densité du milieu pour obtenir une séparation la plus sélective possible. Le lavage intensif qui a été réalisé précédemment permet un contact optimal entre la surface native des matériaux polymères à traiter et le milieu à densité choisie. Un agent mouillant est aussi ajouté dans le milieu à raison de 0,1 à 0,2 % en poids. La présence de cet agent mouillant améliore notablement la séparation. De l'Antarox-FM3™ de la société Rhône-Poulenc a été préférentiellement utilisé. On comprend mieux l'intérêt des étapes précédentes de centrifugation et de séchage, afin que la densité du milieu liquide finement réglée dans le séparateur ne soit pas modifiée par un apport d'eau parasite. Le mélange PP-PE introduit est séparé de façon quasi parfaite. La matière qui surnage, récupérée vers le haut, est composée de PP 76, et la matière qui coule, récupérée dans la partie basse, est composée de PE 77.

Les phases PP, et PE, sont donc séparément centrifugées dans une centrifugeuse 78, pour ramener la quantité de liquide à environ 1 à 2 %. Elles sont séchées dans un sécheur 79, par exemple identique au sécheur déjà décrit ci-dessus 66.

En phase finale de triage, afin de séparer les matériaux 72 sortant de la table à secousse 71, on peut également placer (en pointillés) une dernière étape de séparation par tri électrostatique à table électrostatique trieuse 81, par exemple de la société Hamos Recycling Technique. L'ABS sortant 56 est ainsi séparé 82 de manière très fine du PP chargé talc 83.

En phase finale de triage, afin de séparer les matériaux 72 sortant de la table à secousse 71, on peut également placer (en pointillés) une dernière étape de séparation par un tri optique dans un banc 84, provenant par exemple de la société Sortex, pour sortir des matériaux polymères chargés 87. En effet, le PS sortant 56 contient encore des polyoléfines chargées à 20 % maximum avec 1 < d ≤ 1,05. Le plus souvent, les PE et PP chargés sont de couleur noire. Par contre, les PS 86 sont de couleur blanche, surtout lorsqu'ils proviennent de déchets d'appareils électroménagers. On peut éventuellement réaliser cette séparation par tri électrostatique.

En phase finale de triage, afin de séparer les matériaux 72 sortant de la table à secousse 71, on peut également placer (en pointillés) une dernière étape de triage entre deux matériaux thermoplastiques ayant des points de fusion différents, ou entre des matériaux thermoplastiques et des matériaux thermodurcissables. Un séparateur par fusion différentielle 101 permet de séparer des espèces thermoplastiques fusibles 102, qui collent à la surface d'un tambour rotatif, des espèces 103 qui ne collent pas à la surface du tambour, c'est-à-dire les espèces thermoplastiques fusibles ayant un point de fusion plus élevé ou les espèces thermodurcissables non-fusibles. Le tambour rotatif métallique est recouvert d'un anti-adhésif, de type quasi-cristaux, et il est raclé pour récupérer uniquement les thermoplastiques fondus 102, au fur et à mesure que des matériaux polymères arrivent sur sa surface. La température de la surface du tambour est régulée entre 100 et 300 °C, et en moyenne à 200 °C, en fonction du point de fusion du thermoplastique que l'on veut récupérer.

En phase finale de triage, afin de séparer les matériaux 72 sortant de la table à secousse 71, on peut également placer une dernière étape de séparation par broyage cryogénique (non représentée), donnant des particules de dimensions différentes selon le matériau polymère. D'autres possibilités d'utilisation de dispositifs de séparation par tri balistique, ou de séparation par tri en lit fluidisé, peuvent être employées dans cette phase finale.

Les catégories de matériaux polymères 72, 73, 76, 77, 82, 83, 86, 87 et 102, finement triées grâce à cette installation 1 peuvent être soit commercialisées en vue d'une utilisation directe, soit immédiatement subir séparément de nouvelles étapes de traitement. On procède notamment à une extrusion-compoundage 88 qui permet d'obtenir pour les matériaux polymères ainsi traités, des propriétés mécaniques quasi identiques à celles des matériaux polymères vierges.

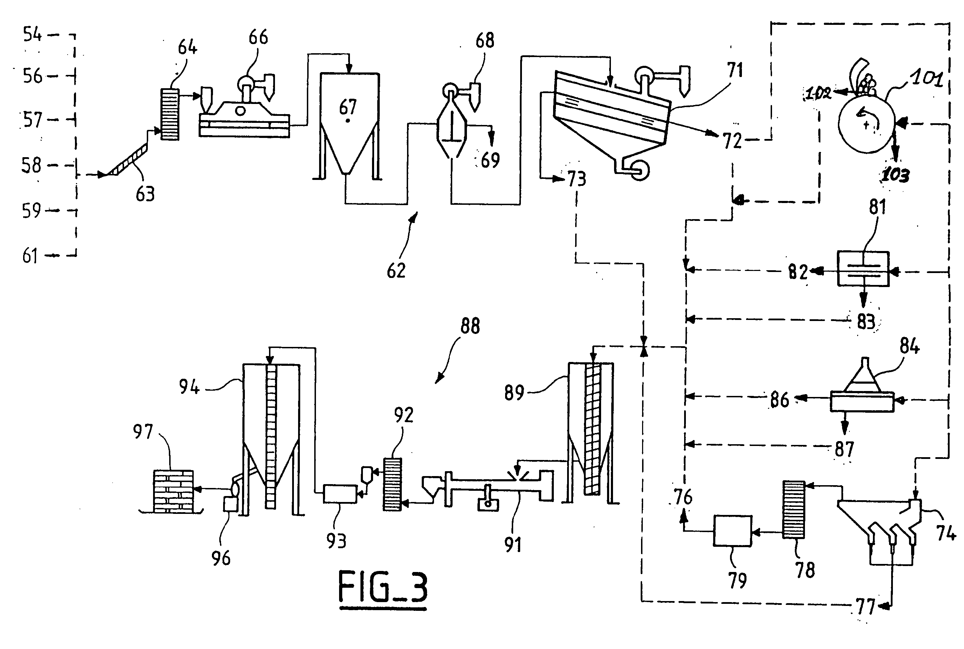

A ce stade, la Figure 3 ne représente que l'installation nécessaire au traitement d'un seul matériau, étant entendu que les autres matériaux sont traités de la même façon, en suivant les mêmes étapes mises en oeuvre par les mêmes dispositifs.

Le matériau polymère 72, 73, 76, 77, 82, 83, 86, 87, 102 est homogénéisé par circulation dans un silo 89, qui sert également au stockage. Le matériau polymère est extrudé dans une extrudeuse 91 pour fabriquer des granulats. Il y a encore une filtration de 20 à 300 µm en cours pour éliminer les ultimes impuretés. Il s'agit là d'un test pour savoir si le produit à extruder est pur. Différents agents peuvent être également introduits : colorants, anti-U.V., etc. Entre le stockage et l'extrusion, on peut éventuellement placer une étape de séparation à flux d'air pour éliminer les fibres et poussières (non représentée). Le matériau polymère est centrifugé dans une centrifugeuse 92 pour éliminer l'eau de refroidissement des granulés. Le matériau polymère sortant sous forme de granulés est calibré dans un calibreur 93 pour l'élimination des fins et des agglomérats. Le matériau polymère est à nouveau homogénéisé dans un silo d'homogénéisation et de stockage 94. En étape finale, Le matériau polymère est mis en sacs d'environ 50 1 dans une machine à ensacher 96.

Les matériaux polymères 97 sortent en tant que produits finis d'excellente qualité, et peuvent être utilisés dans leurs applications habituelles.

Tous les séparateurs hydrauliques utilisés sont dit statiques. Ils peuvent être remplacés par des séparateurs hydrauliques dit dynamiques ou ceux comprenant une pompe et un cyclone pour réaliser un flux de triage circulant. Tous les séparateurs hydrauliques par flottation peuvent être remplacés par des tables de séparation à secousses mais les matériaux que l'on y introduit doivent être secs. Tous les séparateurs hydrauliques par flottation peuvent être également remplacés par des séparateurs électrostatiques, par exemple de la société Hamos Recycling Technique.

Tous les dispositifs, destinés à la mise en oeuvre des phases et chaînes communes 14, 38, 46, 62, 88 de l'installation 1, peuvent être prévus en un seul exemplaire, le procédé s'effectuant alors par fournées, ou prévus en plusieurs exemplaires. De ce fait, les paramètres d'optimisation de séparation de ces appareils vont changer (densités, vitesses de circulation, températures d'extrusion, etc.).

On peut monter une ou plusieurs chaînes de dispositifs en parallèle avec la première, ou bien mettre en oeuvre ces étapes par campagne et alternativement stocker les matériaux polymères. Cette dernière solution est avantageuse si au départ il y a une importante différence dans le débit d'arrivée des matériaux polymères sous forme de déchets 2. On met en oeuvre les différentes étapes constitutives en continu étape par étape, ou on peut mettre en oeuvre les différentes étapes constitutives par fournées successives, avec des arrêts et des stockages en silo de matières après certaines des étapes constitutives.

On constate que la qualité, et donc la valeur commerciale des deux matériaux polyoléfiniques PE et PP est sensiblement équivalente à la qualité du PE et du PP de première fusion. Il en est de même pour les deux matériaux styréniques ABS et PS, ainsi que tous les autres, PMMA, Xenoy™, etc.

Compte tenu des solvants éventuellement utilisés, l'installation 1 répond aux normes antidéflagrantes et les différents appareils sont le plus étanche possible. Dans toute l'installation industrielle décrite ci-dessus les eaux de lavage et de rinçage, les eaux récupérées après égouttage et centrifugation, les eaux de condensation des sécheurs et les eaux des milieux de flottation soit retournent vers le dispositif utilisateur, soit sont collectées par une canalisation afin que soit assuré leur stockage et leur retraitement dans une station d'épuration.

L'invention n'est pas limitée par les détails des modes de réalisation et des exemples choisis pour l'illustrer. Des modifications peuvent être apportées sans pour autant sortir du cadre de l'invention. Par exemple, les matériaux polymères peuvent provenir également des ordures ménagères, des déchets industriels. Les densités des liquides utilisés dans les dispositifs de séparation par flottation peuvent être modifiées selon la nature des matériaux polymères que l'on désire récupérer et séparer.

## Revendications

1. Procédé pour séparer et valoriser toutes catégories de matériaux polymères usagés provenant de déchets, comportant des étapes de broyage, de séparation mécanique, de nettoyage en milieu aqueux et de séparation par densité,
**caractérisé en ce que**
i) dans l'ordre :
- l'étape de broyage s'effectue par fragmentation au moyen d'un broyeur de mailles comprises entre 8 mm et 100 mm, en donnant des plaquettes de polymères usagés
- l'étape de séparation mécanique s'effectue par facteur de forme au moyen d'un tambour rotatif muni d'une grille calibrée dont la maille a une longueur supérieure à la largeur, laissant passer lesdites plaquettes puis,
(ii) dans un ordre quelconque :
- l'étape de nettoyage intense s'effectue par trituration et décapage des surfaces desdites plaquettes en un milieu aqueux dans lequel est développé une puissance comprise entre 0,05 KWH à 0,5 KWH par kilo de matière à traiter, et
- d'une première et seconde phase de séparation par densité, dans lesquelles on fait varier progressivement la densité dans un sens croissant ou dans un sens décroissant, le sens de variation de la densité de ces deux phases étant identique ou différent, les matériaux polymères séparés étant ensuite conduits vers des étapes de séparation.

2. Procédé selon la revendication 1, **caractérisé en ce que**, une étape de broyage suivie de l'étape de séparation mécanique par facteur de forme étant mises en oeuvre selon cet ordre, ces étapes sont ensuite suivies de l'étape de nettoyage et des deux phases de séparation par densité.

3. Procédé selon l'une quelconque des revendications 1 et 2, lesdites étapes étant mises en oeuvre selon l'ordre suivant : l'étape de broyage, suivie de l'étape de séparation mécanique par facteur de forme, suivie de la première phase de séparation par densité, suivie de l'étape de nettoyage puis suivie de la seconde phase de séparation par densité.

4. Procédé selon l'une quelconque des revendications 1 à 3, ladite première phase de séparation par densité comprenant au moins une étape de séparation par densité connectées en parallèle, et ladite seconde phase de séparation par densité comprenant au moins une étape de séparation par densité connectée en parallèle.

5. Procédé selon l'une des revendications précédentes, **caractérisé en ce que** l'on met en oeuvre la première et/ou de la deuxième phase de séparation par densité (14, 46) dans un seul séparateur par densité.

6. Procédé selon la revendication 4 ou 5, **caractérisé en ce que** dans la première phase de séparation par densité (14), l'on fait décroître la densité par paliers d'une étape à l'autre étape, ou en continu lorsque cette phase est mise en oeuvre dans un seul séparateur par densité, et **en ce que** dans la deuxième phase de séparation par densité (46), l'on augmente la densité par paliers d'une étape à l'autre étape, ou en continu lorsque cette phase est mise en oeuvre dans un seul séparateur par densité.

7. Procédé selon la revendication 6, **caractérisé en ce que** dans les étapes de séparation par densité de la première phase (14), l'on conduit les matières, possédant une densité inférieure à la valeur de densité choisie dans l'une desdites étapes, en direction de l'étape de séparation qui la suit directement, et **en ce que** dans les étapes de séparation par densité de la deuxième phase, l'on conduit les matières, possédant une densité supérieure à la valeur de densité choisie dans l'une desdites étapes, en direction de l'étape de séparation qui la suit directement.

8. Procédé selon l'une des revendications 4 à 7, **caractérisé en ce que** chacune des étapes de la première phase de séparation par densité (14) est connectée en série avec chacune des étapes de la deuxième phase de séparation par densité (46).

9. Procédé selon la revendication 8, **caractérisé en ce que** l'on conduit les matières (37), possédant une densité inférieure à la valeur de densité choisie dans la dernière étape de séparation par densité de la première phase (14), en direction de la première étape de séparation par densité de la deuxième phase (46), et **en ce que** l'on conduit les matières (36) possédant une densité supérieure à la valeur de densité choisie dans la dernière étape de séparation par densité de la première phase (14), 1 en direction de la deuxième étape de séparation par densité de la deuxième phase (46), et **en ce que** l'on conduit les matières (34) possédant une densité supérieure à la valeur de densité choisie dans l'avant-dernière étape de séparation par densité de la première phase (14), en direction de la troisième étape de séparation par densité de la deuxième phase (46), et ainsi de suite de manière récurrente jusqu'aux matières (31) possédant une densité supérieure à la valeur de densité choisie dans la deuxième étape de séparation par densité de la première phase (14), qui sont conduites en direction de la dernière étape de séparation par densité de la deuxième phase (46).

10. Procédé selon la revendication 8 ou 9, **caractérisé en ce que** l'on récupère et l'on conduit les matières possédant une densité inférieure à la valeur de densité choisie dans chacune des étapes de la deuxième phase de séparation par densité (46), en direction d'étapes de séparations et purifications supplémentaires.

11. Procédé selon l'une des revendications précédentes, **caractérisé en ce que** dans la première phase de séparation par densité (14), la densité s'échelonne de 1,25 à 1, et **en ce que** dans la deuxième phase de séparation par densité (46), la densité s'échelonne de 1 à 1,25.

12. Procédé selon l'une des revendications précédentes, **caractérisé en ce que** les phases de séparation par densité (14, 46) se font de préférence par flottation en milieu liquide, dont on peut contrôler et régler la densité, qui permet de séparer une matière qui surnage, à densité inférieure à celle du milieu liquide, d'une autre matière qui coule, à densité supérieure à celle du milieu liquide.

13. Procédé selon la revendication 12, **caractérisé en ce que** le milieu liquide, pour les étapes de séparation par densité avec flottation dont la densité est sensiblement égale à 1, comprend de préférence de l'eau, et **en ce que** le milieu liquide, pour les étapes de séparation par densité avec flottation dont la densité est supérieure à 1, comprend de l'eau, des argiles ou des sels, et un agent mouillant.

14. Procédé selon l'une des revendications 1 à 11, **caractérisé en ce que** les phases de séparation par densité (14, 46) sont mises en oeuvre grâce à un dispositif mécanique, et de préférence grâce à une table densimétrique à secousses ou grâce à un séparateur hydraulique dynamique, ou grâce à un séparateur du type cyclone et pompe.

15. Procédé selon l'une des revendications précédentes, **caractérisé en ce que** l'étape de séparation mécanique des matériaux polymères est une étape de séparation par facteur de forme avec des moyens de criblage qui permettent l'élimination de toutes les matières de taille trop importante, et **en ce que** lesdits moyens de criblage comprennent un dispositif de criblage, de préférence à tambour rotatif comprenant une grille calibrée (11).

16. Procédé selon l'une des revendications précédentes, **caractérisé en ce que** l'étape de nettoyage des matériaux polymères est réalisée dans une ou plusieurs cuves (43), en milieu liquide, sous agitation énergique, à température élevée, et avec 50 à 70 % de matériaux polymères et 30 à 50 % de liquide, ledit liquide comprenant notamment de 50 à 100 % d'eau, de 0 à 20 % d'un agent nettoyant, de 0 à 30 % d' un agent d'abrasion, et un agent mouillant, les pourcentages étant exprimés en poids.

17. Procédé selon la revendication 16, **caractérisé en ce que** l'agent nettoyant est de préférence de la soude, de la potasse, du carbonate de sodium, des savons ou un mélange de ceux-ci.

18. Procédé selon la revendication 16, **caractérisé en ce que** l'agent d'abrasion est de préférence du carbonate de calcium en poudre, du talc, de la silice ou de l'alumine ou un mélange de ceux-ci.

19. Procédé selon l'une des revendications précédentes, **caractérisé en ce que** l'on place tout au début du procédé une étape de séparation par criblage, qui permet l'élimination des matières minérales (4).

20. Procédé selon l'une des revendications précédentes, **caractérisé en ce que** l'on intercale, entre la première étape de séparation par criblage et l'étape de broyage, une étape de séparation à flux d'air à puissance variable, qui permet l'élimination de toutes les matières lourdes (8).

21. Procédé selon l'une des revendications précédentes, **caractérisé en ce que** l'on réalise une étape de mouillage, ou d'immersion, ou de trituration des matériaux avec de l'eau ou une solution alcaline, avant la première phase de séparation par densité et avant l'étape de nettoyage des matériaux polymères.

22. Procédé selon l'une des revendications précédentes, **caractérisé en ce que** l'on intercale une deuxième étape de broyage, entre la première phase de séparation par densité et l'étape de nettoyage.

23. Procédé selon l'une des revendications précédentes, **caractérisé en ce que** l'on récupère et l'on conduit les matières qui flottent, dans la deuxième phase de séparation par densité, en direction d'une étape de centrifugation, puis d'une étape de séchage pour éliminer tout liquide résiduel.

24. Procédé selon la revendication 23, **caractérisé en ce que** l'on réalise après l'étape de séchage une étape de séparation à flux d'air qui permet l'élimination de toutes les matières légères, et/ou **en ce que** l'on réalise une étape de séparation par densité grâce à un dispositif mécanique de type table à secousses, après ladite étape de séparation à flux d'air ou après ladite étape de séchage.

25. Procédé selon la revendication 23 ou 24, **caractérisé en ce que** pour séparer encore les matériaux polymères, après l'étape de séchage, ou après l'étape de séparation à flux d'air ou après l'étape de séparation par densité grâce à un dispositif mécanique de type table à secousses, l'on réalise une étape supplémentaire de séparation par tri électrostatique, ou de séparation par tri optique, ou de séparation par tri balistique, ou de séparation par fusion différentielle, ou de séparation par tri en lit fluidisé, ou de séparation par broyage cryogénique, ou de séparation par densité à l'aide d'un séparateur en milieu liquide de densité réglée à une valeur entre 0,9 et 0,95, le milieu liquide comprenant de préférence de l'eau et/ou du méthanol, et/ou de l'éthanol, et un agent mouillant.

26. Procédé selon l'une des revendications précédentes, **caractérisé en ce que** l'on réalise après l'étape de nettoyage ou après chaque étape de séparation par densité avec flottation, ou après chacune des deux phases de séparation par densité, une étape de rinçage et d'égouttage et/ou de centrifugation des matières que l'on désire récupérer.

27. Procédé selon l'une des revendications précédentes, **caractérisé en ce que** pour purifier davantage les matériaux polymères, séparément et successivement, on réalise une étape d'homogénéisation, une étape d'extrusion, une étape de centrifugation, une étape de calibrage, une nouvelle étape d'homogénéisation et en final une étape d'ensachage.

28. Procédé selon la revendication 27, **caractérisé en ce que** l'on place une étape de séparation à flux d'air pour éliminer les fibres et poussières, avant l'étape d'extrusion.

29. Procédé selon l'une des revendications précédentes, **caractérisé en ce que** l'on intercale une étape de stockage en silo à n'importe quel endroit entre chacune des différentes étapes constitutives.

30. Procédé selon l'une des revendications précédentes, **caractérisé en ce que** l'on met en oeuvre les différentes étapes constitutives en continu étape par étape, ou **en ce que** l'on met en oeuvre les différentes étapes constitutives par fournées successives avec des arrêts et des stockages de matières après certaines desdites étapes constitutives,

31. Procédé selon l'une des revendications précédentes, **caractérisé en ce qu'**il permet de recycler du PE, du PP, du PS, de l'ABS, des PP chargés de 20 à 40 %, des PA, du PMMA, du Xenoy^{™}, du PVC, tous pouvant être extrudés ou non extrudés.

32. Installation (1) comportant des moyens de broyage, de séparation mécanique, de nettoyage en milieu aqueux et de séparation par densité destinée à la mise en oeuvre du procédé selon l'une quelconque des revendications précédentes, **caractérisée en ce qu'**elle comprend des dispositifs de broyage (6, 42), deux séries de dispositifs de séparation par densité avec flottation (17, 18, 19, 21, 22, 23, 47, 48, 49, 51, 52, 53) dans lesquelles on fait varier la densité dans un sens croissant ou dans un sens décroissant, un dispositif de séparation mécanique à crible (3), un dispositif de séparation mécanique à tambour rotatif (11) , un dispositif de séparation à flux d'air (7, 68), un dispositif de nettoyage (43), un dispositif de séparation par densité à dispositif mécanique (71), un dispositif de séparation électrostatique (81), un dispositif de séparation par tri optique (84), un dispositif de séparation par fusion différentielle (101), un dispositif de broyage cryogénique, un dispositif de séparation par tri balistique, un dispositif de lit fluidisé, un dispositif de mouillage, un dispositif de rinçage et d'égouttage (44, 63), un dispositif de centrifugation (64, 78, 92), un dispositif de séchage (66, 79), un dispositif d'homogénéisation (89, 94), un dispositif de stockage (67), un dispositif d'extrusion (91), un dispositif de calibrage (93) et d'ensachage (96).

## Claims

1. Method for separating and upgrading all categories of used polymeric materials derived from waste, comprising steps of grinding, mechanical separation, cleaning in an aqueous medium and density separation, **characterised in that**
i) in the following order:
- the grinding step is carried out via fragmentation by means of a grinder with mesh sizes of between 8 mm and 100 mm, thereby yielding used polymer chips;
- the mechanical separation step is carried out by form factor by means of a rotary drum provided with a calibrated screen the mesh of which has a length greater than the width, allowing said chips to pass through, and then,
ii) in any order:
- the intensive cleaning step is carried out by grinding and stripping of the surfaces of said chips in an aqueous medium in which a power is developed of between 0.05 kWh and kWh per kilo of material being processed, and
- from a first and second density separation phase, in which the density is progressively varied in an increasing direction or in a decreasing direction, the direction of variation in the density of these two phases being identical or different, the separated polymeric materials next being conveyed towards separation steps.

2. Method of claim 1, **characterised in that** a grinding step followed by the form factor mechanical separation step is implemented in this order, and these steps are then followed by the cleaning step and the two density separation steps.

3. Method as claimed in any of claims 1 and 2, said steps being implemented in the following order: the grinding step, followed by the form factor mechanical separation step, followed by the first density separation phase, followed by the cleaning step and then followed by the second density separation phase.

4. Method as claimed in any of claims 1 to 3, said first density separation phase including at least one density separation step connected in parallel, and said second density separation phase including at least one density separation step connected in parallel.

5. Method as claimed in one of the preceding claims, **characterised in that** the first and/or the second density separation phase (14, 46) in a single density separator.

6. Method as claimed in claim 4 or 5, **characterised in that**, in the first density separation phase (14), the density is decreased in stages from one step to the other step, or continuously, when this phase is implemented in a single density separator, and **in that**, in the second density separation phase (46), the density is increased in stages from one step to the other step, or continuously, when this phase is implemented in a single density separator.

7. Method of claim 6, **characterised in that**, in the density separation steps of the first phase (14), the materials having a density lower than the chosen density value in one of said steps are conveyed in the direction of the separation step which follows it directly, and **in that**, in the density separation steps of the second phase, the materials having a density higher than the chosen density value in one of said steps are conveyed in the direction of the separation step which follows it directly.

8. Method as claimed in one of claims 4 to 7, **characterised in that** each of the steps of the first density separation phase (14) is connected in series with each of the steps of the second density separation phase (46).

9. Method of claim 8, **characterised in that** the materials (37) having a density lower than the chosen density value in the last density separation step of the first phase (14) are conveyed in the direction of the first density separation step of the second phase (46), and **in that** the materials (36) having a density higher than the chosen density value in the last density separation step of the first phase (14) are conveyed in the direction of the second density separation step of the second phase (46), and **in that** the materials (34) having a density higher than the chosen density value in the second to last density separation step of the first phase (14) are conveyed in the direction of the third density separation step of the second phase (46), and so on and so forth recurrently as far as the materials (31) having a density higher than the chosen density value in the second density separation step of the first phase (14), which are conveyed in the direction of the last density separation step of the second phase (46).

10. Method as claimed in claim 8 or 9, **characterised in that** the materials having a density lower than the chosen density value in each of the steps of the second density separation phase (46) are recovered and conveyed in the direction of additional separation and purification steps.

11. Method as claimed in one of the preceding claims, **characterised in that**, in the first density separation phase (14), the density ranges from 1.25 to 1, and **in that**, in the second density separation phase (46), the density ranges from 1 to 1.25.

12. Method as claimed in one of the preceding claims, **characterised in that** the density separation phases (14, 46) are preferably carried out via flotation in a liquid medium, the density of which can be controlled and adjusted, which enables a floating material having a density lower than that of the liquid medium to be separated from another flowing material having a density higher than that of the liquid medium.

13. Method of claim 12, **characterised in that**, for the density separation steps with flotation, the density of which is substantially equal to 1, the liquid medium preferably includes water, and **in that**, for the density separation steps with flotation, the density of which is greater than 1, the liquid medium includes water, with clays or salts, and a wetting agent.

14. Method as claimed in one of claims 1 to 11, **characterised in that** the density separation phases (14, 46) are implemented by means of a mechanical device, and preferably by means of a vibrating grading table or by means of a dynamic hydraulic separator, or by means of a cyclone or pump separator.

15. Method as claimed in one of the preceding claims, **characterised in that** the step of polymeric material mechanical separation is a form factor separation step with screening means which enable all of the materials of too large a size to be eliminated, and **in that** said screening means include a screening device, preferably having a rotary drum including a calibrated screen (11).

16. Method as claimed in one of the preceding claims, **characterised in that** the polymeric material cleaning step is carried out in one or more vats (43), in a liquid medium, under energetic agitation, at a high temperature, and with 50 to 70% polymeric material and 30 to 50% liquid, said liquid including, in particular, from 50 to 100% water, from 0 to 20% of a cleaning agent, from 0 to 30% of an abrasive agent, and a wetting agent, the percentages being expressed by weight.

17. Method of claim 16, **characterised in that** the cleaning agent is preferably soda, potash, sodium carbonate, soaps or a mixture thereof.

18. Method of claim 16, **characterised in that** the abrasive agent is preferably powdered calcium carbonate, talc, silica or alumina, or a mixture thereof.

19. Method as claimed in one of the preceding claims, **characterised in that** screen separation step is placed at the very beginning of the process, thereby enabling elimination of the mineral matter (4).

20. Method as claimed in one of the preceding claims, **characterised in that** a variable-power airflow separation step is inserted between the first screen separation step and the grinding step, thereby enabling elimination of all of the heavy materials (8).

21. Method as claimed in one of the preceding claims, **characterised in that** a step of wetting or immersing or grinding the materials with water or an alkaline solution is carried out prior to the first density separation phase and prior to the polymeric material cleaning step.

22. Method as claimed in one of the preceding claims, **characterised in that** a second grinding step is inserted between the first density separation phase and the cleaning step.

23. Method as claimed in one of the preceding claims, **characterised in that** the floating materials in the second density separation phase are recovered and conveyed in the direction of a centrifuging step, and then towards a drying step, in order to eliminate any residual liquid.

24. Method of claim 23, **characterised in that**, after the drying step, an airflow-separation step is carried out, which enables all of the light materials to be eliminated, and/or **in that** a density separation step is carried out by means of a mechanical device of the shaking table type, after said airflow-separation step or after said drying step.

25. Method as claimed in claim 23 or 24, **characterised in that**, in order to further separate the polymeric materials, after the drying step, or after the airflow-separation step or after the density separation step by means of a mechanical device of the shaking table type, an additional step is carried out of separating by electrostatic sorting, or separating by optical sorting or by ballistic sorting, or separating by differential melting, or separation by fluidised-bed sorting, or separation by cryogenic sorting, or density separation by means of a separator in a liquid medium having a density adjusted to a value of between 0.9 and 0.95, the liquid medium preferably including water and/or methanol, and/or ethanol, and a wetting agent.

26. Method as claimed in one of the preceding claims, **characterised in that**, after the cleaning step or after each density separation step with flotation, or after each of the two density separation phases, a step is carried out of rinsing and draining and/or centrifuging the materials that one wishes to recover.

27. Method as claimed in one of the preceding claims,
**characterised in that**, in order to further purify the polymeric materials, separately or successively, a homogenisation step, a calibration step, another homogenisation step and finally a bagging step are carried out.

28. Method of claim 27, **characterised in that**, in order to eliminate the fibres and dust, an airflow-separation step is placed before the extrusion step.

29. Method as claimed in one of the preceding claims, **characterised in that** a silo storage step at any location is inserted between each of the various constituent steps.

30. Method as claimed in one of the preceding claims, **characterised in that** the various constituent steps are implemented continuously, step by step, or **in that** the various constituent steps are implemented in successive batches, with halts and storage of materials after some of said constituent steps.

31. Method as claimed in one of the preceding claims, **characterised in that** enables recycling of PE, PP, PS, ABS, PP filled with from 20 to 40% PA, PMMA, Xenoy^{™}, PVC, all capable of being extruded or non-extruded.

32. Installation (1) comprising means of grinding, of mechanical separation, of cleaning in an aqueous medium and of density separation, intended for implementing the method as claimed in any of the preceding claims, **characterised in that** it includes grinding devices (6, 42), two series of density separation devices with flotation (17, 18, 19, 21, 22, 23, 47, 48, 49, 51, 52, 53) in which the density is varied in an increasing direction or in a decreasing direction, a mechanical separation device with a screen (3), a mechanical separation device with a rotary drum (11), an airflow-separation device (7, 68), a cleaning device (43), a density separation device with a mechanical device (71), an electrostatic separation device (81), an optical sorting separation device (84), a differential melting separation device (101), a cryogenic grinding device, a ballistic sorting separation device, a fluidised-bed device, a wetting device, a rinsing and draining device (44, 63), a centrifuging device (64, 78, 92), a drying device (66, 79), a homogenisation device (89, 94), a storage device (67), an extrusion device (91), and a calibration (93) and bagging (96) device.

## Patentansprüche

1. Verfahren zum Trennen und Verwerten aller Arten von verbrauchten Polymermaterialien aus Abfällen mit den Schritten Mahlung, mechanische Trennung, Reinigung in wässrigem Medium und Dichtetrennung, **dadurch gekennzeichnet, dass**
i) in der Reihenfolge:
- der Mahlschritt durch Zerkleinerung unter Verwendung eines Mahlwerks mit einer Maschenweite zwischen 8 mm und 100 mm erfolgt, wobei sich Plättchen aus verbrauchten Polymeren ergeben,
- der mechanische Trennschritt mittels Formfaktor erfolgt, unter Verwendung einer Rotationstrommel mit einem kalibriertem Siebrost, dessen Maschenweite länger als breit ist, so dass die Plättchen passieren können, und
ii) in einer beliebigen Reihenfolge:
- der intensive Reinigungsschritt durch Triturieren und Beizen der Oberflächen der Plättchen in einem wässrigen Medium erfolgt, in dem sich eine Leistung zwischen 0,05 kWh und 0,5 kWh pro Kilo aufzubereitendem Material entwickelt, gefolgt
- von einer ersten und zweiten Dichtetrennstufe, in denen die Dichte in zunehmender Richtung oder in abnehmender Richtung progressiv geändert wird, wobei die Änderungsrichtung der Dichte dieser beiden Stufen identisch oder verschieden ist, wobei die Polymermaterialien anschließend Trennschritten zugeführt werden.

2. Verfahren nach Anspruch 1, **dadurch gekennzeichnet, dass** wenn ein Mahlschritt und nachfolgend der mechanische Trennschritt mittels Formfaktor in dieser Reihenfolge durchgeführt werden, auf diese Schritte der Reinigungsschritt und die beiden Dichtetrennstufen folgen.

3. Verfahren nach irgendeinem der Ansprüche 1 und 2, wobei die Schritte in folgender Reihenfolge durchgeführt werden: Mahlschritt, darauf folgend der mechanische Trennschritt mittels Formfaktor, darauf folgend die erste Dichtetrennstufe, darauf folgend der Reinigungsschritt und darauf folgend die zweite Dichtetrennstufe.

4. Verfahren nach irgendeinem der Ansprüche 1 bis 3, wobei die erste Dichtetrennstufe mindestens einen parallel geschalteten Dichtetrennschritt umfasst, und die zweite Dichtetrennstufe mindestens einen parallel geschalteten Dichtetrennschritt umfasst.

5. Verfahren nach einem der vorhergehenden Ansprüche, **dadurch gekennzeichnet, dass** man die erste und/oder die zweite Dichtetrennstufe (14, 46) in einem einzigen Dichteabscheider durchführt.

6. Verfahren nach Anspruch 4 oder 5, **dadurch gekennzeichnet, dass** in der ersten Dichtetrennstufe (14) die Dichte stufenweise Schritt für Schritt bzw. kontinuierlich erniedrigt wird, wenn diese Stufe in einem einzigen Dichteabscheider durchgeführt wird, und dass in der zweiten Dichtetrennstufe (46) die Dichte stufenweise Schritt für Schritt bzw. kontinuierlich erhöht wird, wenn diese Stufe in einem einzigen Dichteabscheider durchgeführt wird.

7. Verfahren nach Anspruch 6, **dadurch gekennzeichnet, dass** in den Dichtetrennschritten der ersten Stufe (14) die Materialien mit einer Dichte, die unter dem in einem der Schritte gewählten Dichtewert liegt, dem unmittelbar nachfolgenden Trennungsschritt zugeführt werden, und dass in den Dichtetrennschritten der zweiten Stufe die Materialien mit einer Dichte, die über dem in einem der Schritte gewählten Dichtewert liegt, dem unmittelbar nachfolgenden Trennungsschritt zugeführt werden.

8. Verfahren nach einem der Ansprüche 4 bis 7, **dadurch gekennzeichnet, dass** die Schritte der ersten Dichtetrennstufe (14) jeweils mit den Schritten der zweiten Dichtetrennstufe (46) in Serie geschaltet sind.

9. Verfahren nach Anspruch 8, **dadurch gekennzeichnet, dass** die Materialien (37) mit einer Dichte, die unter dem im letzten Dichtetrennschritt der ersten Stufe (14) gewählten Dichtewert liegt, dem ersten Dichtetrennschritt der zweiten Stufe (46) zugeführt werden, und dass die Materialien (36) mit einer Dichte, die über dem im letzten Dichtetrennschritt der ersten Stufe (14) gewählten Dichtewert liegt, dem zweiten Dichtetrennschritt der zweiten Stufe (46) zugeführt werden, und dass die Materialien (34) mit einer Dichte, die über dem im vorletzten Dichtetrennschritt der ersten Stufe (14) gewählten Dichtewert liegt, dem dritten Dichtetrennschritt der zweiten Stufe (46) zugeführt werden, und so weiter bis zu den Materialien (31) mit einer Dichte, die über dem im zweiten Dichtetrennschritt der ersten Stufe (14) gewählten Dichtewert liegt, die dem letzten Dichtetrennschritt der zweiten Stufe (46) zugeführt werden.

10. Verfahren nach Anspruch 8 oder 9, **dadurch gekennzeichnet, dass** die Materialien mit einer Dichte, die unter dem in jedem der Schritte der zweiten Dichtetrennstufe (46) gewählten Dichtewert liegt, rückgewonnen und zusätzlichen Trenn- und Reinigungsschritten zugeführt werden.

11. Verfahren nach einem der vorhergehenden Ansprüche, **dadurch gekennzeichnet, dass** in der ersten Dichtetrennstufe (14) die Dichte im Bereich von 1,25 bis 1 liegt, und dass in der zweiten Dichtetrennstufe (46) die Dichte im Bereich von 1 bis 1,25 liegt.

12. Verfahren nach einem der vorhergehenden Ansprüche, **dadurch gekennzeichnet, dass** die Dichtetrennstufen (14, 46) vorzugsweise durch Flotation in einem wässrigen Medium erfolgen, dessen Dichte kontrolliert und reguliert werden kann, welche Flotation es ermöglicht, ein aufschwimmendes Material, dessen Dichte geringer ist als die des wässrigen Mediums, von einem anderen, absinkenden Material zu trennen, dessen Dichte höher ist als die des wässrigen Mediums.

13. Verfahren nach Anspruch 12, **dadurch gekennzeichnet, dass** das wässrige Medium für die Dichtetrennschritte mit Flotation mit einer Dichte von etwa gleich 1 bevorzugt Wasser aufweist, und dass das wässrige Medium für die Dichtetrennschritte mit Flotation mit einer Dichte von größer als 1 Wasser, Tone oder Salze und ein Benetzungsmittel aufweist.

14. Verfahren nach einem der Ansprüche 1 bis 11, **dadurch gekennzeichnet, dass** die Dichtetrennstufen (14, 46) mit einer mechanischen Vorrichtung durchgeführt werden, und vorzugsweise mit einem Schütteltisch oder mit einem hydrodynamischen Abscheider oder mit einem Abscheider vom Typ Zyklon/Pumpe.

15. Verfahren nach einem der vorhergehenden Ansprüche, **dadurch gekennzeichnet, dass** der mechanische Trennschritt zum Trennen der Polymermaterialien ein Trennschritt mittels Formfaktor unter Verwendung von Siebmitteln ist, mit denen alle zu groben Materialien entfernt werden können, und dass die Siebmittel eine Siebvorrichtung umfassen, vorzugweise mit einer Rotationstrommel, die einen kalibrierten Siebrost (11) aufweist.

16. Verfahren nach einem der vorhergehenden Ansprüche, **dadurch gekennzeichnet, dass** der Reinigungsschritt zum Reinigen der Polymermaterialien in einer oder mehreren Wannen (43) in flüssigem Medium unter energischem Rühren bei hoher Temperatur und mit 50 bis 70 % Polymermaterialien und 30 bis 50 % Flüssigkeit durchgeführt wird, welche Flüssigkeit insbesondere 50 bis 100 % Wasser, 0 bis 20 % eines Reinigungsmittels, 0 bis 30 % eines Schleifmittels und ein Benetzungsmittel enthält, wobei die Prozente in Gewicht ausgedrückt sind.

17. Verfahren nach Anspruch 16, **dadurch gekennzeichnet, dass** es sich bei dem Reinigungsmittel vorzugsweise um Soda, Kaliumcarbonat, Natriumcarbonat, Seifen oder eine Mischung daraus handelt.

18. Verfahren nach Anspruch 16, **dadurch gekennzeichnet, dass** es sich bei dem Schleifmittel vorzugsweise um pulvriges Kalziumcarbonat, Talk, Silizium- oder Aluminiumoxid oder eine Mischung daraus handelt.

19. Verfahren nach einem der vorhergehenden Ansprüche, **dadurch gekennzeichnet, dass** ganz am Anfang des Verfahrens ein Trennschritt mittels Siebung vorgesehen wird, mit dem Mineralstoffe entfernt werden können.

20. Verfahren nach einem der vorhergehenden Ansprüche, **dadurch gekennzeichnet, dass** zwischen ersten Trennschritt mittels Siebung und Mahlschritt ein Trennschritt mittels Luftstrom mit regelbarer Leistung zwischengeschaltet wird, mit dem alle schweren Materialien (8) entfernt werden können.

21. Verfahren nach einem der vorhergehenden Ansprüche, **dadurch gekennzeichnet, dass** vor der ersten Dichtetrennstufe und vor dem Reinigungsschritt der Polymermaterialien ein Benetzungs- oder Immersions- oder Triturationsschritt der Materialien mit Wasser oder einer alkalischen Lösung durchgeführt wird.

22. Verfahren nach einem der vorhergehenden Ansprüche, **dadurch gekennzeichnet, dass** zwischen erste Dichtetrennstufe und Reinigungsschritt ein zweiter Mahlschritt zwischengeschaltet wird.

23. Verfahren nach einem der vorhergehenden Ansprüche, **dadurch gekennzeichnet, dass** die schwimmenden Materialien in der zweiten Dichtetrennstufe rückgewonnen und einem Zentrifugierschritt und anschließend einem Trocknungsschritt zugeführt werden, um jegliche Restflüssigkeit zu entfernen.

24. Verfahren nach Anspruch 23, **dadurch gekennzeichnet, dass** nach dem Trocknungsschritt ein Trennschritt mittels Luftstrom durchgeführt wird, mit dem alle leichten Materialien entfernt werden können, und dass nach dem Trennschritt mittels Luftstrom oder nach dem Trocknungsschritt ein Dichtetrennschritt mit einer mechanischen Vorrichtung vom Typ Schütteltisch durchgeführt wird.

25. Verfahren nach Anspruch 23 oder 24, **dadurch gekennzeichnet, dass** zur weiteren Trennung der Polymermaterialien nach dem Trocknungsschritt oder nach dem Trennschritt mittels Luftstrom oder nach dem Dichtetrennschritt mit einer mechanischen Vorrichtung vom Typ Schütteltisch ein zusätzlicher Trennschritt zur Trennung durch elektrostatische Sortierung oder zur Trennung durch optische Sortierung oder zur Trennung durch ballistische Sortierung oder zur Trennung durch differentielle Schmelzung oder zur Trennung durch Sortierung im Wirbelbett oder zur Trennung durch Kryomahlung oder zur Trennung nach Dichte mit einem Abscheider in wässrigem Medium durchgeführt wird, dessen Dichte auf einen Wert zwischen 0,9 und 0,95 eingestellt ist, wobei das wässrige Medium vorzugsweise Wasser und/oder Methanol und/oder Ethanol und ein Benetzungsmittel aufweist.

26. Verfahren nach einem der vorhergehenden Ansprüche, **dadurch gekennzeichnet, dass** nach dem Reinigungsschritt oder nach jedem Dichtetrennschritt mit Flotation oder nach jeder der beiden Dichtetrennstufen ein Spül- und Entwässerungs- und/oder Zentrifugierschritt an den Materialien durchgeführt wird, die man rückgewinnen will.

27. Verfahren nach einem der vorhergehenden Ansprüche, **dadurch gekennzeichnet, dass** zur weiteren Reinigung der Polymermaterialien getrennt und sukzessiv ein Homogenisierungsschritt, ein Extrusionsschritt, ein Zentrifugierschritt, ein Kalibrierschritt, ein erneuter Homogenisierungsschritt und schließlich ein Sackabfüllschritt durchgeführt werden.

28. Verfahren nach Anspruch 27, **dadurch gekennzeichnet, dass** dem Extrusionsschritt ein Trennschritt mittels Luftstrom vorangestellt wird, um Fasern und Staub zu eliminieren.

29. Verfahren nach einem der vorhergehenden Ansprüche, **dadurch gekennzeichnet, dass** an einer beliebigen Stelle jeweils zwischen den einzelnen konstitutiven Schritten ein Siloeinlagerungsschritt zwischengeschaltet wird.

30. Verfahren nach einem der vorhergehenden Ansprüche, **dadurch gekennzeichnet, dass** die einzelnen konstitutiven Schritte Schritt für Schritt kontinuierlich durchgeführt werden, oder dass die einzelnen konstitutiven Schritte gruppenweise durchgeführt werden, mit Unterbrechungen und Materialeinlagerungen nach gewissen dieser konstitutiven Schritte.

31. Verfahren nach einem der vorhergehenden Ansprüche, **dadurch gekennzeichnet, dass** es die Wiederverwendung von PE, PP, PS, ABS, PP-Materialien mit 20 bis 40 % Füllstoffgehalt, PA-Materialien, PMMA, Xenoy™, PVC gestattet, die alle extrudierbar bzw. nicht extrudierbar sind.

32. Anlage (1) mit Mitteln zur Mahlung, mechanischen Trennung, Reinigung in wässrigem Medium und Dichtetrennung zur Durchführung des Verfahrens nach irgendeinem der vorhergehenden Ansprüche, **dadurch gekennzeichnet, dass** sie umfasst: Mahlvorrichtungen (6, 42), zwei Reihen von Vorrichtungen zur Dichtetrennung mit Flotation (17, 18, 19, 21, 22, 23 ; 47 48, 49, 51, 52, 53), in denen die Dichte in zunehmender Richtung oder in abnehmender Richtung geändert wird, eine mechanische Trennvorrichtung mit Sieb (3), eine mechanische Trennvorrichtung mit Rotationstrommel (11), eine Trennvorrichtung mittels Luftstrom (7, 68), eine Reinigungsvorrichtung (43), eine Dichtetrennanordnung mit mechanischer Vorrichtung (71), eine elektrostatische Trennvorrichtung (81), eine Trennvorrichtung mittels optischer Sortierung (84), eine Trennvorrichtung mittels differentieller Schmelzung (101), eine Kryomahlvorrichtung, eine Trennvorrichtung mittels ballistischer Sortierung, eine Wirbelbettvorrichtung, eine Benetzungsvorrichtung, eine Spül- und Entwässerungsvorrichtung (44, 63), eine Zentrifugiervorrichtung (64, 78, 92), eine Trocknungsvorrichtung (66, 79), eine Homogenisierungsvorrichtung (89, 94), eine Einlagerungsvorrichtung (67), eine Extrusionsvorrichtung (91), eine Kalibrier- (93) und eine Sackabfüllvorrichtung (96).
